# EUROPÄISCHE PATENTANMELDUNG

(11) **EP 1 036 708 A2**
(43) Veröffentlichungstag der Anmeldung: **20.09.2000**
(21) Anmeldenummer: 00102367.0
(22) Anmeldetag: 04.02.2000
(51) Int. Cl.: B60R 13/02, B60R 13/08

(54) **Dachabdeckung und Verfahren zu seiner Herstellung**

(30) Priorität: 08.03.1999 DE 19910274
(71) Anmelder: Christian Heinrich Sandler GmbH & Co. KG, 95126 Schwarzenbach a d Saale (DE)
(72) Erfinder: Tröger, Klaus, 95126 Schwarzenbach/S. (DE)

(57) **Zusammenfassung**

Beschrieben wird ein Aufbau eines Fahrzeugdaches (7), welcher zumindest aus einer Trägerkomponente (2) und mit damit verbundenen Absorberelementen (3) besteht, in die bei Bedarf auch Kabelstränge (6) integriert sind. Das so erhaltene Dachelement kann auf sehr einfache Weise in das Fahrzeug eingebaut werden und wird zusätzlich zur Fixierung in den Randbereichen auch in der Fläche des Dachbereiches der Fahrzeugkarosserie befestigt, was zur Vermeidung des Wärmedurchhanges des Dachhimmels (1) beiträgt.

## Beschreibung

Die vorliegende Erfindung betrifft eine Dachabdeckung für Kraftfahrzeuge.

Das Dach von Kraftfahrzeugen hat neben der bekannten Grundfunktion mehrere unterschiedliche Aufgaben. Zum einen bildet es den optischen Abschluß des Innenraumes in Richtung Dachbereich der Karosserie, wobei meist auf ein gefälliges Aussehen der zum Fahrzeuginnenraum zeigenden Abschlußschicht Wert gelegt wird. Zum anderen hat das Fahrzeugdach die Aufgabe der Geräuschdämmung im Fahrzeug, denn der Dachbereich der Karosserie, welcher heute nach wie vor überwiegend aus Blech gefertigt ist, würde ohne geeigneten Dachaufbau eine gute Reflexions- und Resonanzfläche für die Fahr- und Motorgeräusche bilden und Geräusche des Fahrzeuginnenraumes verstärken oder reflektieren.

Weiterhin dient der Dachaufbau zum Verbergen der in modernen Fahrzeugen vorhandenen Kabelstränge, welche elektrische Funktionselemente zwischen Fahrzeugbug und Fahrzeugheck oder auch der Fahrzeugseiten verbinden.

Heute übliche Fahrzeugdächer bestehen beispielsweise aus einem Dachhimmel, aus Absorberelementen und aus weiteren in den Dachhimmelaufbau einfließenden Elementen, wie z.B. Kabelstränge o.ä. Den Abschluß des Fahrzeugdaches bildet der Dachteil der Karosserie.

Die innenraumseitige Schicht des Dachhimmels besteht aus einer Optik-(Dekor-) Schicht, aus Vliesstoff, Wirkware, Strickware, Gewebe, Folie o.ä., unter welcher eine Zwischenschicht angeordnet sein kann, beispielsweise um dem Aufbau gefälligeres, weiches Aussehen, sowie einen ebensolchen Griff zu verleihen. Danach folgt üblicherweise eine Verstärkungsschicht, welche häufig aus einem Glasgewebe, Glasgelege oder einem Glasvlies besteht. Nicht zuletzt wegen eines Zieles der Automobilindustrie Glasfasermaterialien aus dem Fahrzeuginnenraum zu verbannen, wurden Verstärkungen aus Pflanzenfaserrohstoffen vorgeschlagen (Melliand Textilberichte Band 75 (1994) Heft 11, Seite 892-896, 898, Autoren: (Mieck-K-P; Nechwatal-A; Knobelsdorf-C; Thüringisches Institut für Textil- und Kunststoffforschung, Rudolstadt) da diese, ähnlich wie die Glastextilien einen hohen Modulwert besitzen. Nicht bewährt dagegen, obwohl beispielsweise im US-Patent 5,660,908 erwähnt, haben sich Verstärkungen aus Polyesterfilamenten, da der Modulwert der Polyesterfilamente für diese Verstärkungsaufgabe zu gering ist.
Der Verstärkungsschicht folgt eine Trägerkomponente, die das Rückgrat des Dachhimmels bildet. Diese besteht beispielsweise aus Thermo-Formschaum, oder aus thermisch oder phenolharzverfestigten Reißspinnstoffen oder aus harzverfestigter Lignocellulose oder aus einem aus thermoplastischen oder amorphen Bindefasern und Matrixfasern bestehenden Vliesstoff.
Der Trägerkomponente folgt bei Bedarf eine weitere Verstärkungsschicht.

Die Absorberelemente dienen zur Schalldämmung, und zwar sowohl zur Körperschall- als auch zu Luftschalldämmung. Diese liegen im Allgemeinen in Streifen- oder in Blattform vor oder sind Zuschnitte unterschiedlicher Konturen und unterschiedlicher Dicke und werden vor dem Einbau des Dachhimmels bevorzugt dort an den inneren Dachbereich des Karosseriebleches adhäsiv oder mechanisch befestigt, wo von ihnen eine optimale Wirkung bezüglich der Schalldämmung erwartet wird. Absorber bestehen üblicherweise aus mit Folie abgedeckten Faserabsorbern, aus Schaumstoff, aus thermisch verfestigtem Vliesstoff, aus phenolharzverfestigtem Vliesstoff, aus schmelzgeblasenem Vliesstoff, aus Vliesstoff auf Regeneratbasis, aus Vliesstoff auf Mineralfaserbasis, oder dergleichen.

Bei der Fahrzeugfertigung wird heute üblicherweise so vorgegangen, daß die das Dach durchlaufenden Kabelstränge vom Inneren der Rohkarosserie aus, an dem inneren Dachbereich des Fahrzeuges befestigt werden. Desgleichen werden die Absorber in den inneren Dachbereich des Fahrzeuges eingefügt und durch verkleben oder über Steckverbindungen mit dem Karosserieblech verbunden.
Erst danach wird der fertige Dachhimmel in das Fahrzeug eingeführt und lediglich in den Randbereichen des Dachhimmels an der Karosserie befestigt, so daß die mittleren Bereiche des Dachhimmels nicht mit dem restlichen Fahrzeugdach verbunden sind und so der Himmel allein durch seine steife Ausführung im Mittenbereich seine Stabilität erhält.

Eine derartige Verfahrensweise hat verschiedene Nachteile.

Beispielsweise ist die Einbringung und die Befestigung der Kabelstränge und der Absorber im beengten Fahrzeuginnenraum sehr anstrengend, da diese Arbeiten in einer Überkopfposition durchgeführt werden müssen. Da der Arbeiter durch eine derartige Arbeit schnell erschöpft und er so diese Arbeit kaum über längere Zeit ausführen kann.

Ein weiterer Nachteil besteht darin, daß verschiedene, für die Trägerkomponente des Dachhimmels verwendbare, ansonsten vorteilhafte Ausgangsmaterialien wie z.B thermisch verfestigte Polyestervliesstoffe bei diesem Verfahren nicht verwendet werden können, bzw. aufgrund zu hoher Fertigungs- und/oder Materialkosten nicht eingesetzt werden.

Derartige Dachhimmel mit einer Trägerkomponente aus thermisch verfestigten Polyestervliesstoffen sind seit geraumer Zeit bekannt. So beschreibt die US 4,840,832 einen Dachhimmel aus einem Nadelvlies der Mischung 0 - 80 % Polyester 3 - 20 den und 20 - 100 % Mantel-Kern Bindefaser. Das Vlies wird mit einer heißen Form verpreßt und nach dem Abkühlen der Form entnommen. Bei Bedarf kann ein Glasgewebe als Verstärkerschicht aufkaschiert werden oder Latex aufgesprüht werden. Der Dachhimmel ist so flexibel. daß er zum Einbau zusammengerollt werden kann und z.B. durch die Fensteröffnung in das Auto geschoben werden kann. Danach springt das Teil wieder auf und kann eingebaut werden.

Auch das EP 681 620 und das EP 469 309 befassen sich mit Vliesstoffen aus 100 % Polyesterfasern, welche grundsätzlich als Trägerkomponenten für Dachhimmel geeignet sind.

Die Vorteile einer Trägerkomponente aus thermisch verfestigten Polyestervliesstoffen sind in den zitierten Schriften erläutert und liegen u.a. in der einfachen Verformbarkeit, sowie in der erheblichen Gewichtserparnis gegenüber herkömmlichen Materialien.

Thermisch verfestigte Polyestervliesstoffe als Trägerkomponente des Dachhimmels haben weiterhin den entscheidenden Vorteil, daß sie einen einfach wiederverwertbaren Aufbau ermöglichen, nämlich dann, wenn alle Schichten des Dachhimmels polymereinheitlich ausgebildet sind, also die Dekorschicht, die Verstärkungsschicht, die Trägerschicht und die ggf. benötigten Kleber.

Wie eingangs erwähnt, erfüllen allerdings Verstärkungsmaterialien aus Polyesterfilamenten, -garnen oder - fasern nicht die Forderungen an einen hohen Modul, wie er für eine genügende Versteifung eines nur in den Randbereichen befestigten Dachhimmels notwendig ist.

| *Modulwerte* | |
|---|---|
| Polyester | 70 - 120 |
| Glas | 280 - 300 |
| (Lit.: Reuthlinger Fasertafel, Dr. Egbers, Dr. Ehrler, ITV Denkendorf, veröff. v. Textilpraxis International) | |

Der Einsatz einer Verstärkungsschicht ist aber bedingt durch die eingangs erwähnte, gängige Praxis des Einbaues von Dachhimmeln nach dem Stand der Technik notwendig, nämlich dadurch, daß der Dachhimmel lediglich in den Randbereichen des Dachhimmels an der Karosserie befestigt wird, so daß die mittleren Bereiche des Dachhimmels nicht mit dem restlichen Fahrzeugdach verbunden sind und so der Himmel allein durch seine steife Ausführung im Mittenbereich seine Stabilität erhält. Eine fehlende oder eine ungeeignete Verstärkungsschicht (z.B. aus Polyester) würde besonders im Mittelbereich zu Instabilitäten des

Dachhimmels führen, was sich besonders in Schwingungen des Dachhimmels äußert und zu einem erhöhten Wärmedurchhang in diesem Bereich führt.

Ziel der Erfindung ist es, ein Fahrzeugdach zur Verfügung zu stellen, bei welchem beim Dachhimmel auf Verstärkungsschichten verzichtet werden kann, welcher in vereinfachter Weise eingebaut werden kann und welcher dadurch erhebliche Kostenvorteile bringt.
Bei entsprechender Auswahl der Komponenten ist bei in einer bevorzugten Ausführungsform der Erfindung möglich, einen polymereinheitlichen Dachhimmel aus Polyester herzustellen, welcher auf sehr einfacher Weise einer Wiederverwertung zugänglich ist und die Forderungen nach einem geringen Wärmedurchhang erfüllt.

Die Aufgabe wird gemäß den Merkmalen des Anspruches 1 gelöst. Vorteilhafte Ausgestaltungen der Erfindung weren in den Unteransprüchen 2 - 11 beschrieben. Ein für die Umsetzung vorteilhaftes Verfahren wird in Anspruch 12 beschrieben, eine vorteilhafte Ausgestaltung des Verfahrens findet sich in Anspruch 13.

### Erläuterung der Zeichnungen:

Figur 1 zeigt schematisch die Draufsicht einer bevorzugten Ausführungsform des erfindungsgemäßen Dachaufbaues

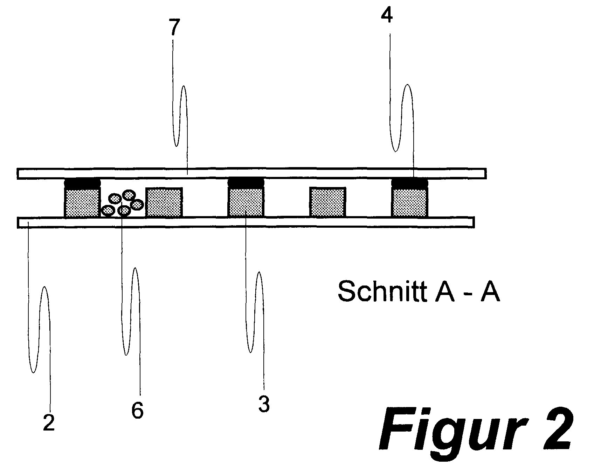

Figur 2 zeigt schematisch einen Schnitt entlang der in der Figur 1 dargestellten Achse A - A

Im Gegensatz zur eingangs beschriebenen Praxis, die das Dach durchlaufenden Kabelstränge und ggf andere funktionelle Elemente, sowie die Absorberelemente, vom Inneren der Rohkarosserie aus, an den inneren Dachbereich des Fahrzeuges durch verkleben oder über Steckverbindungen mit dem Karosserieblech, zu befestigen und erst nach diesen Arbeitsgängen den Dachhimmel einzusetzen und diesen lediglich in den Randbereichen an der Karosserie zu fixieren, geht die Erfindung von dem Konzept aus, die Dachelemente Dachhimmel, Absorber und ggf. die Kabelstränge zu einem Element zu integrieren und dieses Element komplett entweder adhäsiv oder per Steckverbindungen oder durch andere chemische, mechanische oder physikalische Verbindungsverfahren an der Karosserie zu befestigen.

Ein Dachimmelaufbau mit integrierten funktionellen Elementen ist aus der DE 196 53 431 bekannt. Hierbei handelt es sich um ein Dachhimmelmodul, bei dem eine Platte integriert ist, an welche innere Einrichtungen, elektrische Zubehörteile, Antennen, und Stecker vormontiert sind. Die Platte befindet sich im Bugbereich des Dachhimmels, wobei sich an die Platte ein konventioneller Dachhimmel anschließt. Eine weitergehende Integration von Absorberelementen und beispielsweise in Richtung Fahrzeugheck verlaufendenen Kabelsträngen oder anderen funktionellen Elementen ist nicht vorgesehen.

Der erfindungsgemäße Fahrzeugdachaufbau besteht aus einem Dachhimmel mit daran befestigten Absorberelementen 3, in die bei Bedarf die ansonsten an das Dachblech 7 angebrachten, üblicherweise vom Fahrzeugbug zum Fahrzeugheck verlaufenden Kabelstränge 6, integriert sind.

Die Trägerkomponente 2, die das Rückgrat des Dachhimmels bildet, besteht aus Thermo-Formschaum, oder aus thermisch oder phenolharzverfestigten Reißspinnstoffen oder aus harzverfestigter Lignocellulose.
In einer bevorzugten Ausführungsform besteht die Trägerkomponente 2 aus einem thermisch verfestigten Vliesstoff aus überwiegend Polyesterfasern. Derartige Vliesstoffe können nach den Krempelverfahren oder nach aerodynamischen Vliesbildungsverfahren hergestellt werden, sie können in unverdichteter Form vorliegen oder durch geeignete Verfahren, wie z.B durch Nadelverfahren verdichtet sein.
In der WO 88/00258 wird prinzipiell die Herstellungsweise von verdichteten, aber nicht vernadelten thermisch verfestigten Vliesstoffen auf Polyesterbasis beschrieben, während im US-Patent 4,568,581 die Herstellung eines Trägerschicht geeigneten durch Vernadelung verdichteten thermisch verfestigten Polyestervliesstoffes beschrieben wird.

Thermisch verfestigte, für die Trägerkomponente geeignete Polyestervliesstoffe bestehen überwiegend aus einer Mischung bestehend aus Trägerfasern und aus Bindefasern. Während die Trägerfasern die Aufgabe haben, dem Vliesstoff mechanische Eigenschaften wie z.B. Wiedererholungsvermögen, und Zähigkeit zu verleihen, dienen die Bindefasern beispielsweise zur Verfestigung des Vliesstoffes, zur Erhöhung der Zugfestigkeiten und zur Erreichung der thermischen Stabilität.

Die Stärke der Trägerfasern liegt üblicherweise in einer Größenordnung von 1,7 dtex bis ca. 60 dtex wobei ein Wert zwischen 3,3 und 28 dtex bevorzugt wird. Selbsverständlich kann als Trägerfaser eine Mischung unterschiedlicher Faserstärken verwendet werden. Die Trägerfasern sind bevorzugt gekräuselt, ihre Länge wird u.a. vom gewählten Vliesbildungsverfahren bestimmt und liegt üblicherweise im Bereich von 20 bis 200 mm, bevorzugt zwischen 38 bis 150 mm.

Als Bindefasern eignen sich Fasern aus Polyester, deren Schmelzpunkt zumindest teilweise um mindestens 20 °C niedriger liegt als derjenige der Trägerfasern. Bevorzugt als Bindefasern sind Bikomponentenfasern. Derartige Bikomponentenfasern bestehen aus 2 polymeren Polyestern, deren Schmelzpunkte sich um üblicherweise mehr als 20°C voneinander unterscheiden. Die Polymere können in unterschiedlicher Weise in der

Faser angeordnet sein. So ist eine sogenannte sea-island-Struktur möglich, bei der ein Polymer als Matrix fungiert, während das andere mehr oder weniger tropfenförmig in der Matrix verteilt vorliegt. Auch eine side-by-side-Anordnung ist möglich, bei der die beiden Polymere nebeneinander entlang der Faserlängsachse angeordnet sind. Bevorzugt wird jedoch die Mantel-Kern-Anordnung, bei der das Polymer mit dem höheren Schmelzpunkt im Kern angeordnet ist, während das niedrigschmelzende Polymer konzentrisch um dieses angeordnet ist. Derartige Fasern bestehen z.B. im Kern aus Polyethylenglykolterephthalat mit einem Schmelzpunkt von ca. 256 °C oder aus Polybutylenglykolterephthalat mit einem Schmelzpunkt von ca. 225 °C, wähhrend der Mantel aus einem Co-Polyester mit einem Schmelzpunkt von 110°C bis ca. 200 °C besteht. Im Falle eines Kernes aus Polyethylenglykolterephthalat ist auch eine Mantel aus Polybutylenglykolterephthalat möglich. Derartige Fasern sind handelsüblich. Die Faserstärke dieser Fasern liegt meist zwischen 1,7 und 30 dtex.
Das Mischungsverhältnis zwischen Trägerfaser und Bindefaser kann in weiten Bereichen variieren. Der Bindefaseranteil beträgt im Allgemeinen zwischen 10 und 90 %, während der der Anteil der Trägerfasern 90% bis 10 % betragen kann. Derartige Materialien werden in der EP 469 309 beschrieben.

Auch Fasermischungen, wie sie in der EP 476 538 beschrieben werden, können für das Trägermaterial verwendet werden. Die hier beschriebene Bindefaser ist eine Polyesterfaser mit hohen amorphen Anteilen, welche während er Vliesverfestigung unter Bindung der Trägerfasern in einen irreversiblen kristallinen Zustand übergeht.

Die Trägerkomponente besteht aus Gedanken der Wiederverwertbarkeit bevorzugt aus 100% Polyesterfasern. Die Funktion des Dachaufbaues wird aber durch eine geringe Menge artfremder Fasern nicht gestört. Derartige Fasern können in Prozentsätzen von unter 10 %, z.B. mit dem

Zweck der Verbesserung der Ableitung elektrostatischer Elektrizität, beigefügt sein.

Die Trägerkomponente kann in Richtung Fahrgastraum mit einer Zwischenschicht, vorzugsweise aus Polyestervliesstoff und/oder einer Optikschicht versehen sein.

Erfindungsgemäß ist die Trägerkomponente in Richtung Karosserie mit dem Absorberelement 3 verbunden. Die Verbindung kann durch einen die gesamte Fläche bedeckenden oder partiell aufgebrachten Klebstoff, durch Hochfrequenz- oder Ultraschallschweißverfahren, durch thermische Verbindung oder durch mechanische Verfahren ausgeführt sein. Das Absorberelement kann aber auch alternativ an die Trägerkomponente mittels eines Spritzgußverfahrens angefügt sein.

In einer bevorzugten Ausführungsform basieren im Hinblick auf die Recyclingfähigkeit der Dachaufbaues die Klebstoffe oder mechanischen Befestigungsmittel auf einem Polyesterpolymer.

Das Absorberelement 3 kann aus unterschiedlichen Materialien bestehen. Üblich sind mit Folie abgedeckte Faserabsorber, Schaumstoff, thermisch verfestigte Vliesstoffe, phenolharzverfestigtee Vliesstoffe, schmelzgeblasene Vliesstoffe, Vliesstoffe auf Regeneratbasis, Vliesstoffe auf Mineralfaserbasis oder dergleichen. Bevorzugt wird vor dem Hintergrund des Recyclinggedankens ein thermisch verfestigter Vliesstoff aus Polyesterfasern. Auf die Eignung derartiger Vliesstoffe zur Schallabsorption wurde im Vortrag 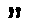 Einsatz von synthetischen Fasern zur Gewichtsreduzierung im Automobil", Dr. rer. nat. Ralf Dopheide, 1.12.1999, Haus der Technik, Essen, hingewiesen.

Absorberelemente werden in Dicken von 0,5 bis 30mm in vom Einsatzzweck abhängigen Flächenmassen eingesetzt.

Das Absorberelement 3 kann bevorzugt als geschlossene Fläche vorliegen, welche mit der Trägerkomponente 2 verbunden ist. Dieser Verbund wird zusätzlich zur Randbefestigung mit dem Karosserieblech des inneren Fahrzeugdaches 7 entweder über die gesamte Fläche des Absorbers oder partiell verbunden.

In einer weiteren bevorzugten Ausführungsform können jedoch absorberseitig in den Verbund aus Trägerkomponente 2 und Absorberelement 3 Kabelstränge 6, welche vom Fahrzeugbug zum Fahrzeugheck, oder auch zu den Seitenbereichen des Fahrzeuges verlaufen, integriert werden. Hierzu ist es zweckmäßig, absorberseitig in den Verbund aus Trägerkomponente 2 und Absorberelement 3 Aussparungen 5 vorzusehen, in die die Kabel 6 eingelegt werden können, bzw in denen die Kabel verlaufen.
Derartige Aussparungen 5 können in einer bevorzugten Ausführungsform dadurch erzeugt werden, daß die Absorberelemente 3 blatt- oder streifenweise, voneinander beabstandet, mit der Trägerkomponente 2 verklebt werden. Im Falle einer streifenweisen Anordnung können dann die Kabel in die Kanäle 5, welche sich zwischen den Absorberstreifen 3 gebildet werden, eingelegt werden. Im Falle der blattweisen Anordnung liegt das Absorberelement z.B. als flächige Anordnung rechteckiger oder quadratischer Elemente vor, welche voneinander beabstandet sind, so daß sich entsprechende Längs- und Querfugen bilden, in die die Kabel eingelegt werden. Auch eine unregelmäßige Anordnung der Absorberblätter ist denkbar, z.B. um gezielt kritische Schwingungsbereiche zu dämmen. Auch unregelmäßige Konturen des Absorberelementes können bei Bedarf eingesetzt werden.

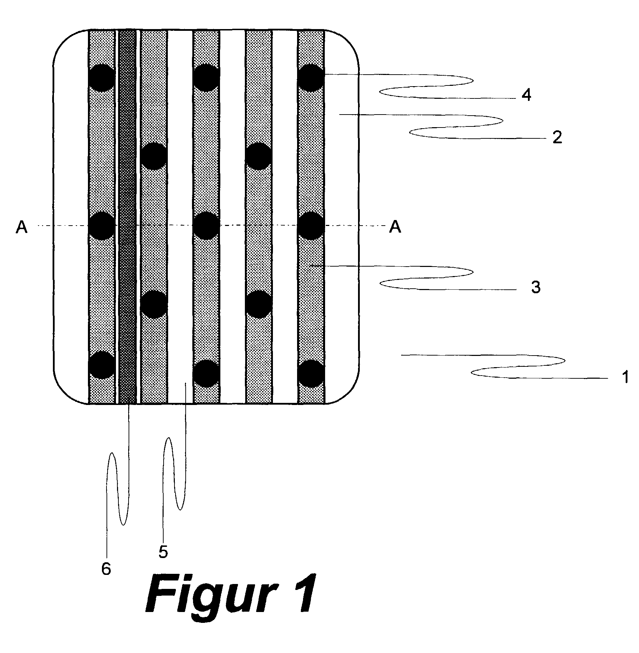

Die Figur 1 zeigt beispielsweise die Ausführungsform der streifenförmigen Anordnung der Absorberelemente.

In einer anderen bevorzugten Ausführungsform sind die die Kabel aufnehmenden Kanäle 5 durch einen Prägevorgang in das überwiegend flächig aufgebrachte Absorberelement eingeprägt. Dies kann mit Hilfe von beheizten Werkzeugen geschehen, welche in das nachgiebigen Absorberelement eingedrückt werden und dieses an den betreffenden Stellen verformen. Auch die Prägung eines erhitzten Absorberelements durch ein kaltes Werkzeug ist durchführbar. In die so geschaffenen Kanäle können wiederum die Kabel eingelegt werden.

In einer weiteren bevorzugten Ausführungsform können zur Bildung der Kanäle Kabelaufnahmen, beispielweise in Form von Rohren oder in Form von Halbschalen eingesetzt werden.

In einer weiteren bevorzugten Ausführungsform können die Kabel direkt in das erhitzte, thermoplatische Absorberelement eingelegt werden, wobei sich nach dem Erkalten stabile, die Kabel enthaltende Kanäle ergeben.

Bei Bedarf kann eine Abdeckung der mit Kabel gefüllten Kanäle nach oben zu erfolgen. Die Abdeckung kann aus einer bei der Formung der Trägerkomponente gebildeten Lasche bestehen oder aus einen beim Zuschnitt des Absorberelements gebildeten Überstand. Die Lasche bzw. der Überstand können zum Zweck des Verschließens der Kanale einfach auf diese geklappt und ggf. verschlossen werden. Auch ein einfaches Aufkleben eines Abdeckmaterials, beispielweise eines Vliesstoffes ist denkbar.

Der aus diese Weise gefertigte Dachhimmel, zumindest bestehend aus einer Trägerkomponente und einer damit verbundenen Absorberschicht und ggf. integrierten Kabelsträngen, kann nun ohne Schwierigkeiten in das Fahrzeug eingebaut werden.

Die Fixierung des erfindungsgemäßen Dachhimmels 1 erfolgt zunächst konventionell im Randbereich des Daches an den zugeordneten Karosserieteilen. Im Gegensatz zum konventionellen Verfahren ist es aber aufgrund des integrierten Aufbaues nun noch ohne Mehrkosten möglich, den erfindungsgemäßen Dachhimmel zusätzlich und entweder über die gesamte Fläche des Absorbers oder partiell an der Innenfläche des Karosseriedachteils zu befestigen. Dies bringt den entscheidenden Vorteil, daß der Polyesterdachhimmel, welcher ja frei von einer Verstärkungsschicht ist, in der Fläche des Fahrzeugdaches zusätzlich gehalten wird und die Gefahr eines Wärmedurchhanges dadurch vermieden wird.

Die Fixierung des erfindungsgemäßen Dachhimmels an der Innenfläche des Karosseriedachteils kann bevorzugt mechanisch über an den Träger komponente und/oder den Absorber angebrachte mechanische Befestigungselemente 4 wie z.B. über Clipse erfolgen. In einer weiteren bevorzugten Ausführungsform erfolgt die Fixierung adhäsiv über Klebstoffe, Klebebänder und dergleichen. Hierdurch wird eine optimale Blechanlage des Absorbers erreicht, was die akustischen Eigenschaften erheblich verbessert.

In einer bevorzugten Ausführungsform basieren im Hinblick auf die Recyclingfähigkeit des Dachhimmels die Klebstoffe oder mechanischen Befestigungsmittel auf einem Polyesterpolymer.

Ein erfindungsgemäßer Dachaufbau bringt entscheidende Vorteile gegenüber dem Stand der Technik. So wird bei Anwendung einer bevorzugten Ausführungsform neben einer Arbeitserleichterung und einer Kostenersparnis hiermit erstmals die Verwendung eines Dachhimmels mit einer Trägerkomponente aus 100 % Polyesterfasern möglich, ohne den bisher beobachteten Wärmedurchhang fürchten zu müssen, welcher die kommerzielle Umsetzung des Polyester-Dachhimmels verhinderte. Die Realisierung eines voll wiederverwertbaren Dachhimmels ist bei entsprechender Auswahl der Komponenten nun möglich. Ein zusätzlicher Vorleil des erfindungsgemäßen Dachaufbaues liegt darin, daß die Verbindung zwischen Träger und Absorber sowie der Verbindung dieses Elementes mit dem Dachteil der Karosserie versteifend auf ebendieses Blechteil wirkt.

Eine flächige Fixierung des konventionellen Dachhimmels würde zusätzliche Kosten verursachen und ist aus diesem Grund nicht akzeptabel.

Der erfindungsgemäße Dachaufbau bringt erhebliche Kostenvorteile, da Teile der Dachmontage, welche bislang mühsam im Innenraum des Fahrzeuges vorgenommen werden mußten, außerhalb des Fahrzeuges vorgenommen werden können und das komplett vorgefertigte Dachhimmelelement in einem einzigen Schritt in das Fahrzeug eingebaut und dort befestigt werden kann.

## Patentansprüche

1. Dachaufbau für Fahrzeuge, zumindest bestehend aus mindestens einer Trägekomponente, mindestens einer Absorberkomponente und dem Dachteil der Karosserie, bei welchem die Trägerkomponente aus einem thermisch verfestigten Vliesstoff aus überwiegend Polyesterfasern besteht, wobei die Polyesterfasern aus einer Mischung von mindestens einer Bindefaserart und mindestens einer Trägerfaserart zusammengesetzt sind, und wobei mindestens die Trägerkomponente in den Randbereichen mit der Karosserie verbunden ist,
dadurch gekennzeichnet, daß
die Trägerkomponente und die Absorberkomponente miteinander verbunden sind und der Verbund zusätzlich an mindestens einer weiteren Stelle mit dem Dachteil der Karosserie verbunden ist.

2. Dachaufbau für Fahrzeuge nach Anspruch 1,
dadurch gekennzeichnet, daß
die Absorberkomponente aus mehreren Einzelteilen vorliegt und die Einzelteile auf der Trägerkomponente derart angeordnet sind, daß von einem Rand des Trägermaterials zum gegenüberliegenden Rand des Trägermaterials durchgehende Kanäle vorliegen.

3. Dachaufbau für Fahrzeuge nach Anspruch 1,
dadurch gekennzeichnet, daß
die Absorberkomponente in einer einteiligen, überwiegend die Fläche der Trägerkomponente bedeckenden Form vorliegt.

4. Dachaufbau für Fahrzeuge nach Anspruch 1 und 3,
dadurch gekennzeichnet, daß
die Absorberkomponente von einem Rand zum gegenüberliegenden Rand eingeprägte Kanäle besitzt.

5. Dachaufbau für Fahrzeuge nach Anspruch 1 und 3,
dadurch gekennzeichnet, daß
die Absorberkomponente von einem Rand zum gegenüberliegenden Rand eingefügte Kabelaufnahmen besitzt.

6. Dachaufbau für Fahrzeuge nach einem der bisherigen Ansprüche,
dadurch gekennzeichnet, daß
in die Kombination von Trägerkomponente und Absorberkomponente absorberseitig Kabelstränge integriert sind.

7. Dachaufbau für Fahrzeuge einem der bisherigen Ansprüche,
dadurch gekennzeichnet, daß
die Absorberkomponente aus mit Folie abgedeckten Faserabsorbern, aus Schaumstoff, aus thermisch verfestigtem Vliesstoff, aus phenolharzverfestigtem Vliesstoff, aus schmelzgeblasenem Vliesstoff, aus Vliesstoff auf Regeneratbasis, aus Vliesstoff auf Mineralfaserbasis, oder dergleichen besteht.

8. Dachaufbau für Fahrzeuge nach einem der bisherigen Ansprüche,
dadurch gekennzeichnet, daß
die Trägerkomponente und die Absorberkomponente, durch flächig oder partiell aufgebrachten Klebstoff, durch Hochfrequenz- oder Ultraschallschweißverfahren, durch thermische Verbindung oder durch mechanische Verfahren miteinander verbunden sind oder daß die Absorberkomponente an die Trägerkomponente mittels eines Spritzgußverfahrens angefügt ist.

9. Dachaufbau für Fahrzeuge nach einem der bisherigen Ansprüche,
dadurch gekennzeichnet, daß
die nicht mit der Absorberschicht verbundene Seite der Trägerkomponente mit einer Zwischenschicht und/oder einer Optikschicht versehen ist.

10. Dachaufbau für Fahrzeuge nach einem der bisherigen Ansprüche,
dadurch gekennzeichnet, daß
die mit der Trägerschicht verbundene Absorberkomponente mit der mindestens einen, weiteren Stelle des Dachteiles der Karosserie, adhäsiv oder mechanisch verbunden ist.

11. Verfahren zur Herstellung eines Dachaufbaues für Fahrzeuge,
gekennzeichnet durch die Verfahrensschritte
a) bereitstellen mindestens einer Trägerkomponente wobei Trägerkomponente aus einem thermisch verfestigten Vliesstoff aus überwiegend Polyesterfasern besteht, wobei die Polyesterfasern aus einer Mischung von mindestens einer Bindefaserart und mindestens einer Trägerfaserart zusammengesetzt sind,
b) bereitstellen mindestens einer Absorberkomponente
c) verbinden der Trägerkomponente mit der Absorberkomponente,
d) verbinden des Verbundes aus Trägerkomponente und
Absorberkomponente, zusätzlich zur Befestigung in den Randbereichen, mit mindestens einer weiteren Stelle des Dachteiles der Karosserie

12. Verfahren Verfahren zur Herstellung eines Dachaufbaues für Fahrzeuge nach Anspruch 11,
dadurch gekennzeichnet, daß nach dem Verbinden der Trägerkomponente mit der Absorberkomponente, absorberseitig Kabelstränge in den Verbund eingebracht werden.
